# EUROPÄISCHE PATENTSCHRIFT

(11) **EP 0 947 638 B1**
(45) Veröffentlichungstag und Bekanntmachung des Hinweises auf die Patenterteilung: **16.11.2005**
(21) Anmeldenummer: 99106416.3
(22) Anmeldetag: 27.03.1999
(51) Int. Cl.: E04B 1/80

(54) **Dämmplatte zur Verwendung an Aussenfassaden von Häusern**
Insulation panel for use on exterior facades of houses
Panneau d'isolation pour façades extérieures de maisons

(30) Priorität: 04.04.1998 DE 19815202
(43) Veröffentlichungstag der Anmeldung: 06.10.1999
(73) Patentinhaber: Gonon, Eugen, 8226 Schleitheim (CH)
(72) Erfinder: Gonon, Eugen, 8226 Schleitheim (CH)
(74) Vertreter: Kohl, Karl-Heinz

(56) Entgegenhaltungen:
- DE-A- 2 522 230
- DE-A- 3 119 520
- DE-A- 3 431 876
- DE-A- 4 316 099
- DE-A- 4 330 314
- FR-A- 2 422 898
- GB-A- 961 536

## Beschreibung

Die Erfindung betrifft eine Außenfassade-Dämmplatte.

Um Außenwände von Häusern sehr gut mit einem K-Wert von 0,20 W/m²K zu isolieren, ist es bekannt, auf der Außenwand von Gebäuden zwei Lagen von Isolierplatten zu befestigen. Da diese Isolierplatten aufeinanderliegend befestigt werden, hat die gesamte Isolierung eine verhältnismäßig große Dicke. Auf die äußere Lage von Isolierplatten wird der Putz unmittelbar aufgebracht.

Es ist auch bekannt, auf die äußere Lage von Isolierplatten unter Zwischenlage von Latten Fassadenplatten zu befestigen. Dadurch wird zwischen den Fassadenplatten und den Isolierplatten eine Zwangslüftung erzielt. Aber auch bei dieser Ausbildung ergibt sich eine große Dicke der Isolierschicht, wodurch erheblicher Nutzungsraum verlorengeht.

Es sind ferner Wärmedämmelemente für ein Unterdach bekannt (DE 31 19 520 A1), bei denen der Kern von einer Ummantelung aus Polystyrol-Hartschaum teilweise umgeben ist. Um eine Materialeinsparung bei der Herstellung des Wärmedämmelementes zu erhalten, sind der Kern oder die Ummantelung mit Hohlräumen versehen.

Der Erfindung liegt die Aufgabe zugrunde, die Außenfassade-Dämmplatte so auszubilden, daß sie nur eine geringe Dicke hat und dennoch optimale Isoliereigenschaften aufweist.

Diese Aufgabe wird erfindungsgemäß mit den Merkmalen des Anspruches 1 gelöst.

Bei der erfindungsgemäßen Außenfassade-Dämmplatte gewährleistet der Kern eine hervorragende Isolierung, da er aus einem Material mit einer kleinen Wärmeleitzahl besteht. Auf der Ummantelung aus Polystyrol-Hartschaum läßt sich ein Putz zuverlässig aufbringen. Die Ummantelung kann zudem mechanisch genau bearbeitet werden, so daß die Außenfassade-Dämmplatte maßgenau gefertigt werden kann. Die Außenfassade-Dämmplatten können darum einwandfrei aneinandergesetzt werden. Da der Kern die guten Isoliereigenschaften der Außenfassade-Dämmplatte gewährleistet, kann die Ummantelung sehr dünn sein, so daß die Außenfassade-Dämmplatte insgesamt nur eine geringe Dicke hat. Es reicht darum aus, an Außenfassaden von Häusern nur eine Lage von Außenfassade-Dämmplatten anzubringen. Da die Ummantelung mit dem Kern über die Profilierungen verbunden ist, zeichnet sich die Ummantelung durch eine hohe Haftzugfestigkeit aus.

Vorteilhafte Weiterbildungen der Erfindung sind in den abhängigen Ansprüchen angegeben.

Die Erfindung wird anhand eines in den Zeichnungen dargestellten Ausführungsbeispieles näher erläutert. Es zeigen:
- Fig. 1: in Draufsicht eine erfindungsgemäße Dämmplatte,
- Fig. 2: eine Ansicht längs der Linie II-II in Fig. 1,
- Fig. 3: eine Ansicht längs der Linie III-III in Fig. 1,
- Fig. 4: in perspektivischer Darstellung die erfindungsgemäße Dämmplatte, von der ein Teil der Ummantelung entfernt ist.

Die Dämmplatte hat rechteckigen Umriß mit einer Länge von beispielsweise etwa 1 m und einer Breite von beispielsweise etwa 0,5 m. Die Dicke der Dämmplatte beträgt beispielsweise etwa 10 bis 12 cm. Selbstverständlich kann die Dämmplatte auch andere Abmessungen aufweisen. Auch muß die Dämmplatte nicht rechteckigen Umriß haben, sondern kann beispielsweise quadratischen Umriß haben oder auch anderen eckigen oder gar runden Umriß aufweisen.

Die Dämmplatte hat einen Kern 1, der vorzugsweise aus Phenolhartschaum besteht. Der Kern 1 kann aus diesem Material geschäumt werden. Ein solcher Kern hat hervorragende Brandschutzwerte und insbesondere einen sehr tiefen K-Wert, gewährleistet somit eine hervorragende Isolierung. Der Kern 1 aus Phenolhartschaum weist eine äußerst geringe Wärmeleitfähigkeit λ auf, die in der Größenordnung von 0,02 W/mK liegt.

Der Kern 1 kann auch aus Polyurethanhartschaum hergestellt sein. Ebenso ist es möglich, als Kern 1 eine Mineralwollplatte zu verwenden, wenn dies aus brandschutztechnischen Gründen gewünscht wird.

Der Kern 1 ist hinsichtlich seiner Umrißform an den Umriß der Dämmplatte angepaßt. Im dargestellten Ausführungsbeispiel hat er rechteckigen Umriß.

Der Kern 1 ist von einer Ummantelung 2 umgeben, die aus Polystyrol-Hartschaum besteht. Der Kern 1 ist vollständig in die Ummantelung 2 eingebettet und dadurch vor Beschädigung zuverlässig geschützt. Um einen sicheren Halt der Ummantelung 2 auf dem Kern 1 zu gewährleisten, weist dieser Profilierungen 3, 4 auf, die vorzugsweise als Vertiefungen in der Oberseite des Kerns 1 ausgebildet sind. Die Profilierungen 3, 4 gewährleisten eine formschlüssige Verbindung mit der Ummantelung 2.

Vorteilhaft sind die Ränder des Kernes 1 jeweils mit einer durchgehenden Profilierung 3 in Form einer Schwalbenschwanznut versehen. Da sich der Querschnitt der Schwalbenschwanznuten nach außen verringert, ergibt sich eine hervorragende Verbindung mit der Ummantelung 2, die in die Schwalbenschwanznuten eingreift. Da die Schwalbenschwanznuten 3 über den Umfang des Kerns 1 vorgesehen sind, ergibt sich eine sichere Verbindung zwischen dem Kern 1 und der Ummantelung 2.

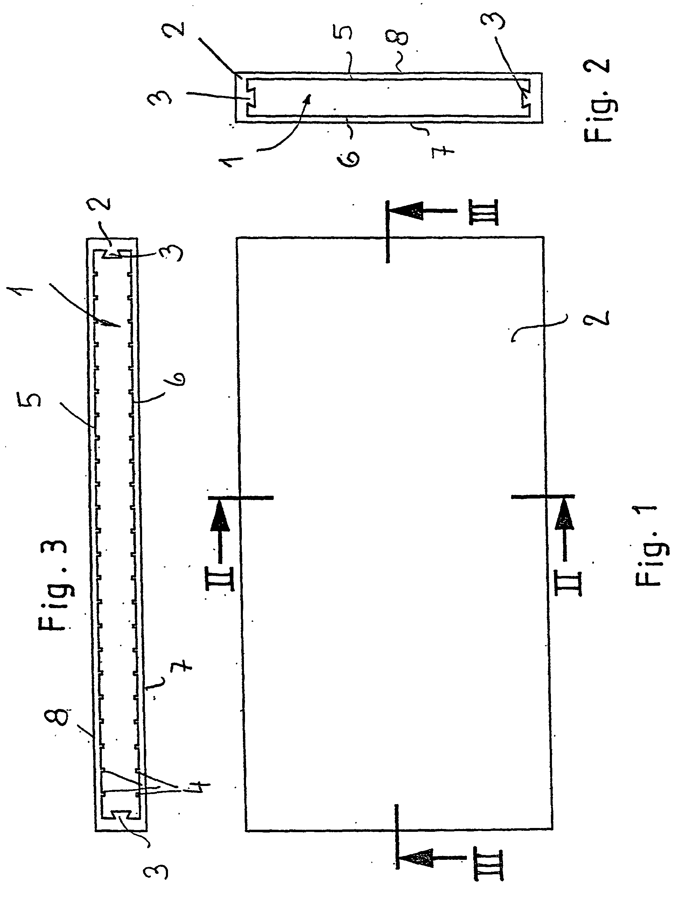

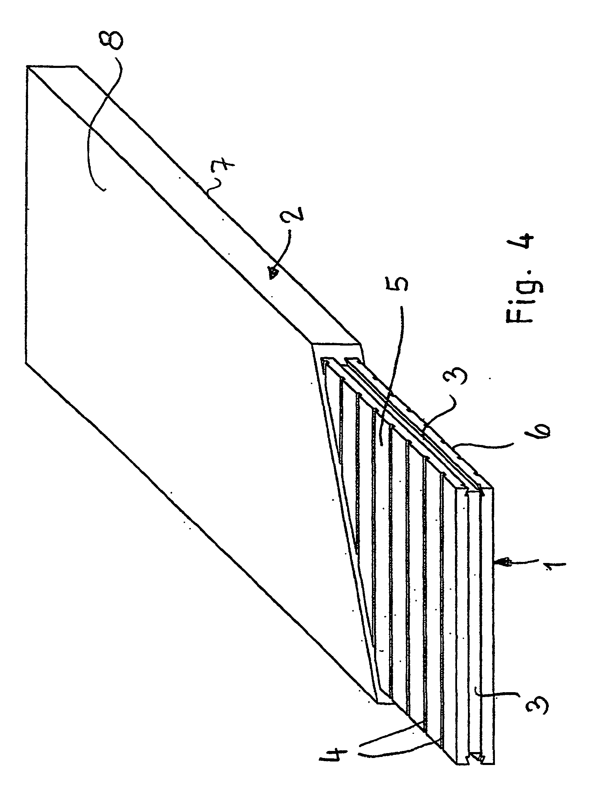

Die Profilierungen 4 sind an der Ober- und/oder Unterseite 5, 6 des Kerns 1 vorgesehen und als zueinander parallele Nuten vorgesehen, die sich über die Breite des Kerns 1 erstrecken. Vorteilhaft liegen die Nuten 4 an der Ober- und Unterseite 5, 6 auf gleicher Höhe (Fig. 3 und 4). Die Nuten 4 können in der Oberseite 5 aber auch versetzt zu den Nuten 4 in der Unterseite 6 liegen. Die Nuten 4 können sich auch in Längsrichtung des Kerns oder schräg hierzu erstrecken. Auch ein wellenförmiger oder zickzackförmiger Verlauf der Nuten 4 ist möglich. Die Nuten 4 gewährleisten über die Fläche des Kerns 1 eine feste Verbindung mit der Ummantelung 2.

Die Profilierungen 3, 4 können in einfacher Weise in den plattenförmigen Kern eingefräst werden. Die so vorbehandelten Kerne 1 werden anschließend vorzugsweise in einem Durchlaufverfahren mit der Ummantelung 2 umschäumt.

Vorteilhaft wird die Ummantelung 2 elastifiziert. Hierzu wird die Dämmplatte durch Walzen geführt, die einen Druck auf die Ober- und Unterseite der Ummantelung ausüben und auf diese Weise die Ummantelung elastifizieren. Die Elastifizierung wirkt sich vorteilhaft auf die Schalldämmung aus.

Die aus Polystyrol-Hartschaum bestehende Ummantelung 2 kann mechanisch einfach und genau bearbeitet werden. Der bei der Bearbeitung anfallende Abfall ist recyclebar. Aufgrund der guten Bearbeitbarkeit der Ummantelung 2 muß der Kern 1 nicht maßlich genau hergestellt werden. Dies hat den Vorteil, daß die Dämmplatte äußerst kostengünstig und dennoch maßgenau hergestellt werden kann. Die Ummantelung 2 selbst muß nicht sehr dick ausgebildet sein. So reicht es aus, auf der Ober- und Unterseite 5, 6 des Kerns 1 die Ummantelung 2 mit einer Dicke von etwa 5 bis 20 mm aufzubringen. Dadurch hat die Dämmplatte nur eine geringe Dicke und gewährleistet dennoch eine optimale Isolierung, d. h. die Dämmplatte hat einen sehr tiefen K-Wert. Der aus Phenolhartschaum bestehende Kern 1 gewährleistet einen sehr hohen Brandschutz.

Die Dämmplatte wird auf ihrer einen Seite 7 mittels eines Klebers am Mauerwerk oder dgl. befestigt. Auf der gegenüberliegenden Außenseite 8 der Dämmplatte wird zunächst ein netzarmierter Grundputz aufgetragen, auf den ein Deckputz aufgebracht wird. Da die herkömmlichen Putze auf Polystyrol abgestellt sind, ist bei Einsatz der Dämmplatte keine Änderung in der Zusammensetzung des Putzes erforderlich, so daß die herkömmlichen Putze verwendet werden können. Darüber hinaus zeichnet sich die aus Polystyrol bestehende Ummantelung 2 durch eine hohe Haftzugfestigkeit aus.

Die Dämmplatte vereint die Vorteile einer sehr geringen Dicke, einer optimalen Isolierung mit einem sehr tiefen K-Wert sowie einem hervorragenden Brandschutzwert.

## Patentansprüche

1. Außenfassade-Dämmplatte mit einem Kern (1), der von einer Ummantelung (2) aus Polystyrol-Hartschaum umgeben ist, aus einem Material mit einer kleinen Wärmeleitzahl (λ) besteht und an seiner Ober- und/oder Unterseite (5, 6) sowie an seinen Seitenrändern mit Profilierungen (3, 4) versehen ist, in die die Ummantelung (2) eingreift und von denen die Profilierungen (4) an der Ober- und/oder Unterseite (5, 6) des Kerns (1) als Nuten ausgebildet sind, während die Profilierungen (3) in den Seitenrändern in deren Längsrichtung sich erstreckende Schwalbenschwanznuten sind, wobei die Profilierungen (3,4) eine Formschlüssige Verbindung mit der Ummantelung (2) gewährleisten.

2. Außenfassade-Dämmplatte nach Anspruch 1,
**dadurch gekennzeichnet, daß** der Kern (1) aus Phenolhartschaum besteht.

3. Außenfassade-Dämmplatte nach Anspruch 1,
**dadurch gekennzeichnet, daß** der Kern (1) aus Polyurethanhartschaum besteht.

4. Außenfassade-Dämmplatte nach Anspruch 1,
**dadurch gekennzeichnet, daß** der Kern (1) aus Mineralwolle besteht.

5. Außenfassade-Dämmplatte nach einem der Ansprüche 1 bis 4,
**dadurch gekennzeichnet, daß** der vorzugsweise rechteckigen Umriß aufweisende Kern (1) plattenförmig ausgebildet ist.

6. Außenfassade-Dämmplatte nach einem der Ansprüche 1 bis 5,
**dadurch gekennzeichnet, daß** sich die Schwalbenschwanznuten über die ganze Länge der Seitenränder des Kerns (1) erstrecken.

7. Außenfassade-Dämmplatte nach einem der Ansprüche 1 bis 6,
**dadurch gekennzeichnet, daß** an der Ober- und/oder Unterseite (5, 6) des Kerns (1) mehrere, vorzugsweise gleich ausgebildete Profillerungen (4) mit Abstand nebeneinander angeordnet sind, die vorteilhaft parallel zueinander liegen.

8. Außenfassade-Dämmplatte nach einem der Ansprüche 1 bis 7,
**dadurch gekennzeichnet, daß** sich die Profilierungen (4) an der Ober- und/oder Unterseite (5, 6) des Kerns (1) zwischen zwei einander gegenüberliegenden Seiten des Kerns (1) erstrecken.

9. Außenfassade-Dämmplatte nach einem der Ansprüche 1 bis 8,
**dadurch gekennzeichnet, daß** die Ummantelung (2) elastifiziert ist.

## Claims

1. Insulation panel for exterior facades with a core (1), surrounded by a housing (2) made of rigid expanded polystyrene foam and consisting of a material with a low coefficient of thermal conductivity (k) and equipped with profiles (3, 4) at its upper and/or lower surface (5, 6) as well as at its side faces, into which fits the housing (2) and the profiles (4) at the upper and/or lower surfaces (5, 6) of the core (1) are formed as grooves whilst the profiles (3) within the side faces are dovetail grooves, extending lengthwise, whereby the profiles (3, 4) guarantee a form-fit connection with the housing (2).

2. Insulation panel for exterior facades according to claim 1,
**characterised in that** the core (1) is made of rigid expanded phenol foam.

3. Insulation panel for exterior facades according to claim 1,
**characterised in that** the core (1) is made of rigid expanded polyurethane foam.

4. Insulation panel for exterior facades according to claim 1,
**characterised in that** the core (1) is made of mineral wool.

5. Insulation panel for exterior facades according to one of the claims 1 to 4,
**characterised in that** the core (1), preferably with a rectangular contour, is in the shape of a plate.

6. Insulation panel for exterior facades according to one of the claims 1 to 5,
**characterised in that** the dovetail grooves extend over the whole length of the side faces of the core (1).

7. Insulation panel for exterior facades according to one of the claims 1 to 6,
**characterised in that** at the upper and/or lower surface (5, 6) of the core (1) there are arranged several profiles (4), preferably of the same shape alongside each other with a gap between each profile; they are situated advantageously parallel to each other.

8. Insulation panel for exterior facades according to one of the claims 1 to 7,
**characterised in that** the profiles (4) at the upper and/or lower surface (5, 6) of the core (1) extend between two sides of the core (1) which are opposite each other.

9. Insulation panel for exterior facades according to one of the claims 1 to 8,
**characterised in that** the housing (2) is made elastic.

## Revendications

1. Panneau d'isolation de façade extérieure comportant un noyau (1) qui est entouré par une enveloppe (2) de mousse dure de polystyrène, qui est constitué d'un matériau de faible coefficient de conductivité thermique (λ) et qui, sur sa face supérieure et/ou inférieure (5, 6) ainsi que sur ses bords latéraux, est pourvu de profilages (3, 4) dans lesquels vient s'engager l'enveloppe (2) et dont les profilages (4) sur la face supérieure et/ou inférieure (5, 6) du noyau (1) sont réalisés sous forme de gorges, tandis que les profilages (3) dans les bords latéraux sont des gorges en queue d'aronde s'étendant dans leur direction longitudinale, les profilages (3, 4) assurant une liaison par coopération de formes avec l'enveloppe (2).

2. Panneau d'isolation de façade extérieure selon la revendication 1, **caractérisé en ce que** le noyau (1) est constitué de mousse dure de phénol.

3. Panneau d'isolation de façade extérieure selon la revendication 1, **caractérisé en ce que** le noyau (1) est constitué de mousse dure de polyuréthanne.

4. Panneau d'isolation de façade extérieure selon la revendication 1, **caractérisé en ce que** le noyau (1) est constitué de laine minérale.

5. Panneau d'isolation de façade extérieure selon l'une des revendications 1 à 4, **caractérisé en ce que** le noyau (1) présentant de préférence un contour rectangulaire est réalisé en forme de plaque.

6. Panneau d'isolation de façade extérieure selon l'une des revendications 1 à 5, **caractérisé en ce que** les gorges en queue d'aronde s'étendent sur toute la longueur des bords latéraux du noyau (1).

7. Panneau d'isolation de façade extérieure selon l'une des revendications 1 à 6, **caractérisé en ce qu'**il est prévu sur la face supérieure et/ou inférieure (5, 6) du noyau (1) plusieurs profilages (4) réalisés de préférence identiques agencés à distance les uns à côté des autres, qui s'étendent de préférence parallèlement les uns aux autres.

8. Panneau d'isolation de façade extérieure selon l'une des revendications 1 à 7, **caractérisé en ce que** les profilages (4) sur la face supérieure et/ou inférieure (5, 6) du noyau (1) s'étendent entre deux côtés mutuellement opposés du noyau (1).

9. Panneau d'isolation de façade extérieure selon l'une des revendications 1 à 8, **caractérisé en ce que** l'enveloppe (2) est rendue élastique.
